# EUROPÄISCHE PATENTSCHRIFT

(11) **EP 2 705 421 B1**
(45) Veröffentlichungstag und Bekanntmachung des Hinweises auf die Patenterteilung: **03.08.2016**
(21) Anmeldenummer: 11717200.7
(22) Anmeldetag: 03.05.2011
(51) Int. Cl.: G06F 7/58

(54) **ZUFALLSZAHLENGENERATOR**
RANDOM NUMBER GENERATOR
GÉNÉRATEUR DE NOMBRES ALÉATOIRES

(43) Veröffentlichungstag der Anmeldung: 12.03.2014
(73) Patentinhaber: Novomatic AG, 2352 Gumpoldskirchen (AT)
(72) Erfinder: KAIBLINGER, Harald, A-2352 Gumpoldskirchen (AT); SCHRÖTTER, Florian, A-2352 Gumpoldskirchen (AT)
(86) Internationale Anmeldenummer: PCT/EP2011/002203
(87) Internationale Veröffentlichungsnummer: WO 2012/149944

(56) Entgegenhaltungen:
- WO-A1-99/26204
- WO-A1-2010/099582
- US-A- 5 518 239
- GLICKMAN ET AL: "Bayesian locally optimal design of knockout tournaments", JOURNAL OF STATITICAL PLANNING AND INTERFERENCE, ELSEVIER, AMSTERDAM, NL, Bd. 138, Nr. 7, 12. Oktober 2007 (2007-10-12), Seiten 2117-2127, XP022553707, ISSN: 0378-3758

## Beschreibung

Die vorliegende Erfindung betrifft einen Zufallszahlengenerator zur Bereitstellung einer Zufallszahl und/oder einer Zufallszahlenkombination und/oder einer Zufallenszahlenmatrix.

Die Generierung von Zufallszahlen wird für vielerlei Anwendungen benötigt, so beispielsweise in kryptografischen Anwendungen, stochastischen Simulationen, Tests von Software und Hardware, Glücks- und Gewinnspielen oder auch Kunst und Musik. Aufgrund der steigenden Nachfrage nach zufällig generierten Zahlen, Zahlenkombinationen oder Zahlenmatrizen werden derartige Zufallszahlen für verschiedene Anwendungszwecke auf Internetplattformen angeboten, vgl. beispielsweise www.random.org.

Die Erzeugung der Zufallszahlen erfolgt hierbei üblicherweise durch elektronische Schaltungen umfassend Mikroprozessoren, instabile Schaltungsgatter und dergleichen. Derartige elektronische Zufallsgeneratoren sind beispielsweise in den Schriften DE 10 2004 047 425 B4, DE 10 2006 009 939 B9 oder EP 10 12 972 B1 bekannt. Derartigen elektronischen Zufallsgeneratoren haftet jedoch der Zweifel an, ob die von den elektronischen Schaltungen generierten Zahlen tatsächlich nach dem Zufallsprinzip generiert sind. Zudem ist die Erzeugung der Zufallszahlen für den Nutzer nicht nachvollziehbar.

Von solchen elektronischen Zufallsgeneratoren abgesehen wurden auch bereits nach anderen Prinzipien arbeitende Zufallsgeneratoren vorgeschlagen, die beispielsweise physikalische Prozesse oder mechanische Zufälligkeiten nutzen. Beispielsweise beschreibt die WO 00/38037 einen Zufallszahlengenerator, der eine alpha-Strahlungsquelle verwendet und die von einem Isotop emittierten Alphateilchen zählt bzw. erfasst. Die US 2007/0245293 A1 beschreibt ferner einen Zufallszahlengenerator, der mit einem Flüssigkeitstropfen arbeitet. Der Flüssigkeitstropfen fällt auf einen Kegel und nimmt dort einen nicht vorhersehbaren Weg, entlang dessen der Tropfen verschiedene Erfassungssensoren betätigt. Die DE 20 2010 016 063 U1 beschreibt einen mechanischen Zufallsgenerator in Form eines Würfels, der näherungsweise kugelförmige Gestalt besitzt und mit Meridianlinien versehen ist, zwischen denen Abflachungen vorgesehen sind. Durch die näherungsweise kugelförmige Gestalt soll die Manipulationsgefahr beim Werfen des Würfels reduziert werden. Ferner beschreibt die DE 10 2008 033 162 A1 einen physikalischen Zufallszahlengenerator, der zwei verschiedene Schwingungen verwendet, von denen eine hinsichtlich des Tastverhältnisses stabilisiert und die andere nicht stabilisiert ist. Hierbei wird dann jeweils überwacht bzw. ermittelt, ob bei Vorliegen einer Amplitude der ersten Schwingung auch die zweite Schwingung eine Amplitude hat oder nicht, woraus sich entsprechende Bitfolgen erzeugen lassen. Die DE 103 58 392 A1 beschreibt einen Zufallszahlengenerator, der mit siedenden Flüssigkeiten arbeitet. Der Bereich über der siedenden Flüssigkeit, in dem Dampfblasen aufsteigen, wird von einer Lichtquelle durchleuchtet, so dass die Dampfblasen einen Teil des Lichts brechen und reflektieren, so dass an einem Fototransistor, der auf der der Lichtquelle gegenüberliegenden Seite des Dampfblasenbereichs angeordnet ist, eine unterschiedliche Anzahl von Photonen ankommt.

Derartige physikalische Zufallszahlengeneratoren bieten jedoch immer noch diver-se Manipulationsmöglichkeiten und unterliegen je nach Ausbildung doch physikalischen Gesetzmäßigkeiten, die kein Zufall sind, beispielsweise Schiefstellungen des Kegels für den Tropfenversuch, Temperaturungenauigkeiten und Flüssigkeitsvariation beim Dampfblasenversuch etc. Je nach Ausbildung ergibt sich zudem eine nur sehr begrenzte Geschwindigkeit der Zahlenerzeugung, was besonders bei mehrstelligen Zufallszahlenfolgen nachteilig ist.

Der vorliegenden Erfindung liegt die Aufgabe zugrunde, einen verbesserten Zufallszahlengenerator der eingangs genannten Art zu schaffen, der Nachteile des Standes der Technik vermeidet und Letzteren in vorteilhafter Weise weiterbildet. Insbesondere soll eine für den Benutzer interessante, von der benötigten Zeit her ausreichend schnelle Zufallszahlenermittlung geschaffen werden, die Manipulationen und Betrug erschwert und die Sicherheit der Steuerung, Überwachung und Auswertung der Zufallszahlengenerierung verbessert.

Erfindungsgemäß wird die genannte Aufgabe durch einen Zufallszahlengenerator gemäß Anspruch 1 gelöst. Bevorzugte Ausgestaltungen der Erfindung sind Gegenstand der abhängigen Ansprüche.

Es wird also vorgeschlagen, für die durchzuführende Ermittelung einer Zufallszahl bzw. Zufallszahlenkombination bzw. -matrix auf ein Geschicklichkeitsspiel bzw. einen Geschicklichkeitssport oder -wettbewerb zurückzugreifen, dessen Ergebnis ein diskreter Zahlenwert ist und diesen an die Steuerung des Zufallszahlengenerators zu übermitteln. Die aus dem Spielergebnis ermittelte Zahl bzw. Zahlenkombination kann beispielsweise in einem Wett- bzw. Spielautomaten als Zufallszahl bzw. Zufallszahlenkombination oder auch für andere Anwendungen anstelle einer von einem elektronischen Zufallsgenerator bereitgestellten Zufallszahl bzw. Zufallszahlenkombination Verwendung finden. Dies ist insofern vorteilhaft, als dass einem Benutzer durch Anzeige des Geschicklichkeitsspielverlaufs das Erzeugen der Zufallszahlen als transparente, d.h. nachvollziehbare bzw. sichtbare Ereignisse erkennbar sind und so das Vertrauen in das System gestärkt ist. Gleichsam bietet das System in ausreichend kurzen Zeitintervallen zuverlässige Zufallszahlen. Erfindungsgemäß umfasst der Zufallszahlengenerator eine Überwachungsvorrichtung zur Überwachung zumindest einer Geschicklichkeitsspiel-/-sport-Anlage, an der ein Geschicklichkeitsspiel/-sport durch zumindest einen Teilnehmer ausführbar ist, welches zumindest ein Spielergebnis liefert, wobei die Überwachungsvorrichtung Spielergebnisbestimmungsmittel zum Bestimmen des Spielergebnisses umfasst, und eine Bestimmungseinrichtung zur Bestimmung der Zufallszahl und/oder Zufallszahlenkombination und/oder Zufallszahlenmatrix aus einem oder mehreren bestimmten Spielergebnissen. Die Zufallszahl, -zahlenkombination oder -matrix kann unmittelbar dem jeweiligen Zahlenwert eines oder mehrerer Spielergebnisse(s) entsprechen, vorzugsweise aber auch unter Beachtung einer vorbestimmten Berechnungs- oder Bildungsregel daraus abgeleitet werden.

Ein Geschicklichkeitsspiel bzw. -sport im Sinne der vorliegenden Anmeldung kann hierbei verschiedene Spiel- oder Wettkampfformen oder generell Live-Ereignisse umfassen, die zum Spaß ohne Gewinnmöglichkeit von Amateuren oder Profis oder in Form von Turnieren mit Wettkampfcharakter und ohne Gewinnmöglichkeit ausgetragen werden können. In vorteilhafter Weiterbildung der Erfindung ist die Überwachungsvorrichtung hierbei einer Kegelbahn- oder Bowlingbahn-Anlage zugeordnet, auf der in an sich bekannter Weise durch Entlangrollen einer Kugel auf einer Bahn am Ende der Bahn stehende Kegel umgeworfen werden können. Die als Ergebnis dienenden diskreten Zahlenwerte sind hierbei die jeweilige Anzahl der durch einen Versuch, oder auch mehrere Versuche, umgeworfenen Kegel bzw. Pins. Alternativ oder zusätzlich kann die Überwachungsvorrichtung auch eine Schießstandanlage, sei es eine Pfeil-und-Bogen-, Armbrustschützen-, Pistolen- oder Gewehranlage, oder auch eine Dart-Anlage überwachen. Hierbei sind die als Ergebnis benutzten Zahlenwerte die Werte der jeweils getroffenen Scheibenringe bzw. Scheibenfelder.

Je nachdem, für welche Art von Anwendung einer Zufallszahl das Spielergebnis in Form eines diskreten Zahlenwerts verwendet wird, kann die Bestimmung der gesuchten Zahl oder Zahlenkombination in unterschiedlicher Weise erfolgen. Wird beispielsweise für eine Lotterie oder ein Roulettespiel eine einzelne Zufallszahl gesucht, kann die vorgenannte Bestimmungseinrichtung eine Berechnungseinrichtung zur Berechnung der Zahl aus mehreren Zahlenwerten entsprechend einer vorgebbaren Rechenvorschrift umfassen. Durch die Heranziehung mehrerer Zahlenwerte zur Bestimmung der Zahl kann die Vorhersagbarkeit und die Gefahr von Manipulationen reduziert werden, da die Zufälligkeitskomponente des Geschicklichkeitsspiels stärker zum Tragen kommt. Beispielsweise können bei Kegel- bzw. Bowlingevents die Spielergebnisse mehrerer Spieler auf verschiedenen Bahnen zusammengezählt werden, oder die Ergebnisse eines Spielers in mehreren Versuchen addiert werden, beispielsweise dergestalt, dass die zu erzeugende Zahl bzw. Zufallszahl als Summe der von vier miteinander wettkämpfenden Kegelspielern in einer Spielrunde umgeworfenen Kegel addiert wird.

Alternativ oder zusätzlich kann dann, wenn nicht eine einzelne Zahl, sondern eine Zahlenfolge oder eine Zahlenmatrix zu bestimmen ist, die genannte Bestimmungseinrichtung eine Zuordnungsvorrichtung zur Zuordnung der einzelnen Zahlenwerte oder der daraus berechneten Zahlen auf jeweils einen Zahlenplatz der Zahlenfolge oder -matrix entsprechend einer vorgebbaren Zurechnungsvorschrift umfassen. Vorteilhafterweise können bei Überwachung einer Kegel- oder Bowlingbahn die in jeweils einer Spielrunde von mehreren Teilnehmern umgeworfenen Kegel die Zahlenwerte in einer Zeile bilden, während die in mehreren Spielrunden umgeworfenen Kegelzahlen die weiteren Zeilen der Zahlenmatrix bilden.

In vorteilhafter Weiterbildung der Erfindung wird an dem Benutzerterminal, an dem die Zufallszahl abgefragt und/oder angezeigt wird, nicht nur das Ergebnis, sondern auch der Verlauf des Geschicklichkeitsspiel-/-sport-Ereignisses angezeigt. Vorteilhafterweise ist hierzu an dem Benutzerterminal ein Bildschirm vorgesehen, der die von Kameras an der Geschicklichkeitssport-/-spiel-Anlage aufgenommenen Bilder anzeigt. Hierdurch kann ein Benutzer des Zufallsgenerators nach der Zahlenanforderung den Ablauf des Wettbewerbs verfolgen, um sodann in der genannten Weise über die eingetretenen Ereignisse informiert zu werden.

Die Überwachungsvorrichtung kann hierfür vorteilhafterweise mehrere Bahnen der Geschicklichkeitsspiel-/-sport-Anlage durch entsprechende Überwachungsmittel überwachen, um die Spielergebnisse verschiedener Teilnehmer auf mehreren Bahnen der Anlage zu überwachen. Die Bestimmungseinrichtung kann die gesuchte Zahl oder Zahlenkombination dann aus den Spielergebnissen von verschiedenen Bahnen bestimmen. Die Überwachung kann hier grundsätzlich auf verschiedene Art und Weise erfolgen. Beispielsweise können die Überwachungsmittel Kameras umfassen, die die Kegelfelder beobachten und die Anzahl der umgeworfenen Kegel bzw. Pins durch eine Bildauswerteeinrichtung, vorzugsweise durch einen Vorher-Nachher-Vergleich, ermitteln. Alternativ oder zusätzlich können die Ergebnisbestimmungsmittel zur Bestimmung der Spielergebnisse auch in die Aufstellvorrichtung zum automatischen Aufstellen der Kegel bzw. Pins integriert sein, beispielsweise dergestalt, dass die Ergebnisbestimmungsmittel bei an Fäden aufgehängten Kegeln die Auslenkung der Fäden beim Umwerfen der entsprechenden Kegel erfassen, oder bei einer fadenlosen Aufstellvorrichtung mittels der Greifer die stehengebliebenen und/oder die umgeworfenen Kegel erfassen, beispielsweise dadurch, dass der Greifkopf mit den Greifermitteln zunächst zurück in die Aufstellposition fährt und zugreift, wodurch die stehengebliebenen Kegel erfasst werden können.

Bei Spiel- bzw. Sportstätten mit mehreren Bahnen wird die Zuordnung der einzelnen Bahnen zu Teilnehmern vorteilhafterweise durch einen beispielsweise elektronischen oder sonstigen Zufallsgenerator bestimmt bzw. ausgelost, d.h. es werden Kombinationspaare von jeweiligem Teilnehmer und jeweiliger Bahn ermittelt. Dadurch kann eine bessere Zufälligkeitsverteilung erreicht werden, da existierende Bahnbesonderheiten wie beispielsweise unterschiedlicher Lichteinfall, unterschiedliche Bahnneigung oder unterschiedliche Ebenheit der Spielbahnen in die Bestimmung der Zahlen bzw. Zahlenkombination mit einfließen. Vorteilhafterweise werden hierbei aus einem Teilnehmerpool die Teilnehmer per elektronischem oder sonstigem Zufallsgenerator bestimmt und den jeweiligen Bahnen zugeordnet oder umgekehrt Bahnen den ausgewählten Teilnehmern zugeordnet. Vorteilhafterweise kann die Zahl an Teilnehmern größer sein als die Zahl der zu bespielenden Bahnen. Alternativ oder zusätzlich kann auch die Zuordnung der Spielgeräte, insbesondere der Wurf- bzw. Bowlingkugel zu den Teilnehmern durch einen elektronischen oder sonstigen Zufallsgenerator bestimmt werden.

In vorteilhafter Weiterbildung der Erfindung können auch mehrere Geschicklichkeitsspiel-/-sport-Stätten, beispielsweise in Form von Bowling- oder Kegelbahnen, die an verschiedenen Orten bzw. auch in verschiedenen Ländern vorgesehen sein können, mittels mehrerer Überwachungsvorrichtungen der genannten Art überwacht werden, um mittels einer geeigneten Auswahlvorrichtung eine jeweilige Geschicklichkeitsspiel-/-sport-Anlage auswählen zu können, deren Spielergebnisse dann für die Ermittlung der Zufallszahlen bzw. Zufallszahlenkombination oder Zufallszahlenmatrix herangezogen wird. Die Auswahl kann hierbei grundsätzlich in verschiedener Art und Weise erfolgen. Beispielsweise könnte die Auswahlvorrichtung einen elektronischen Zufallsgenerator umfassen, mittels dessen die für die Zufallszahlenermittlung herangezogene Geschicklichkeitsspiel-/-sport-Anlage zufallfsgestützt ausgewählt wird. Alternativ oder zusätzlich kann das Benutzerterminal jedoch auch Eingabemittel umfassen, mittels derer die für die Zufallszahlenermittlung heranzuziehende Geschicklichkeitsspiel-/-sport-Anlage von dem Benutzer des Abfrageterminals ausgewählt werden kann. Hierdurch erhält der jeweilige Benutzer eine größere Transparenz und das Gefühl der völligen Manipulationssicherheit, da die Ermittlung der Zufallszahlen bzw. Zufallszahlenkombination von der Auswahl der Geschicklichkeitsspiel-/-sport-Anlage durch den Benutzer abhängt. Gleichwohl wird durch die genannte Auswahlvorrichtung der Grad der Zufälligkeit der Zufallszahlenermittlung noch erhöht, da die Einflüsse verschiedener Geschicklichkeitsspiel-/-sport-Anlagen und der darauf ausgeführten Geschicklichkeitsspiele, die unterschiedlich - beispielsweise bei einer ersten Anlage Bowling und bei einer zweiten Anlage Dart - sein können, in die Zufallszahlenbestimmung einfließen.

In vorteilhafter Weiterbildung der Erfindung kann hierbei die Auswahlvorrichtung Zuordnungsmittel aufweisen, die es ermöglichen, für verschiedene Zahlenplätze einer Zahlenkombination oder -matrix verschiedene Geschicklichkeitsspiel-/-sport-Anlagen auszuwählen derart, dass beispielsweise für die erste Spalte einer Zahlenmatrix eine erste Geschicklichkeitsspiel-/-sport-Anlage ausgewählt und die darauf ermittelten Spielergebnisse herangezogen werden, dass für eine zweite Spalte der Zufallszahlenmatrix eine zweite Geschicklichkeitsspiel-/-sport-Anlage ausgewählt und die dort ermittelten Spielergebnisse herangezogen werden, und für eine dritte Spalte der Zufallszahlenmatrix eine dritte Geschicklichkeitsspiel-/-sport-Anlage - oder ggf. auch wiederum die erste Geschicklichkeitsspiel-/-sport-Anlage-ausgewählt und die dort ermittelten Spielergebnisse herangezogen werden.

Die genannte Zuordnung der verschiedenen, ausgewählten Geschicklichkeitsspiel-/ -sport-Anlagen zu den einzelnen Zahlenplätzen kann hierbei grundsätzlich in verschiedener Weise erfolgen. Beispielsweise können die genannten Zuordnungsmittel einen elektronischen oder sonstigen, physikalischen Zufallsgenerator umfassen, um die Zuordnung zufallsgestützt vorzunehmen. Alternativ oder zusätzlich können jedoch an dem Benutzerterminal Eingabemittel vorgesehen sein, die es erlauben, die genannte Zuordnung durch den Benutzer des Zufallszahlengenerators vornehmen zu lassen.

Um bei der Spielsteuerung Manipulationen vorzubeugen, wird vorgeschlagen, die für die Steuerung bzw. Überwachung des Spielbetriebs verwendeten Daten auf mehrere Orte aufzuteilen und selektiv in verschiedenen Datenspeichern abzulegen, so dass nur ein zentraler Steuerungs- bzw. Überwachungsrechner, der ggf. aus mehreren, separaten Rechnereinheiten bestehen kann, Zugang zu allen benötigten Daten hat. Insbesondere werden auch die teilnehmer- und sportgerätespezifischen Daten aufgesplittet, um die Zueinanderzuordnung von Teilnehmer und Spielgerät bzw. Bahn überwachen und zentral steuern zu können. Vorteilhafterweise wird jeder Spielteilnehmer mit einem vom Spielgerätespeicher separaten Teilnehmerspeicher versehen, in dem Teilnehmerdaten, insbesondere Identifikationsdaten wie eine Teilnehmerkennung abgespeichert sind, die von einem Empfangs-/Lesegerät ausgelesen und in der Datenbank, in der auch die Spielgerätedaten gespeichert sind, und/oder in einer weiteren Datenbank abgelegt werden, und wobei die in der oder den Datenbank(en) gespeicherten Spielgerätedaten und Teilnehmerdaten mit Hilfe von Zuordnungsmitteln einander zugeordnet werden und wobei ein erneutes Auslesen von Spielgerätedaten und Teilnehmerdaten durchgeführt und die Zuordnung der erneut ausgelesenen Spielgerätedaten mit den erneut ausgelesenen Teilnehmerdaten mit der zuvor von den Zuordnungsmitteln vergebenen Zuordnung abgeglichen wird. Durch die Aufteilung der zu speichernden Daten auf mehrere Speicherplätze und die Verwendung von separaten Speichermitteln an den Spielgeräten - im Falle von Kegelbahnen den Kugeln - sowie an den Teilnehmern werden die Manipulationsmöglichkeiten deutlich verringert, insbesondere auch deshalb, weil die Verknüpfung der relevanten Daten, die einerseits die Spielgeräte und/oder die Spielbahnen betreffen und andererseits die Teilnehmer betreffen, an einem sowohl von den Spielgeräten als auch von den Teilnehmern separaten Ort von einem zentralen Rechner und diesem zugeordneten Datenbank erfolgt. Zum anderen wird hierdurch die Steuerung der Zuordnung von Teilnehmer und Spielgeräten variabel und kann ebenfalls vom Rechnersystem erst kurz vor Beginn des Spiels vorgegeben werden, wodurch Manipulationen an Spielgeräten und den daran befestigten Spielgerätespeichern erschwert werden. Insbesondere kann die von den Zuordnungsmitteln generierte Zuordnung auch dazu verwendet werden, eine Startaufstellung vorzugeben. Das erneute Auslesen der Spielgerätedaten und Teilnehmerdaten und das Überprüfen der Zuordnung der erneut ausgelesenen Daten mit der zuvor von den Zuordnungsmitteln vergebenen Zuordnung erlaubt es festzustellen, ob die generierte Spielgerät-/Teilnehmerzuordnung auch eingehalten wurde.

Das Auslesen der in den Spielgerätespeichern gespeicherten Spielgerätedaten und der in den Teilnehmerspeichern gespeicherten Teilnehmerdaten kann hierbei aktiv oder passiv erfolgen, je nachdem, welche Art von Speicherelementen an den Spielgeräten und den Teilnehmern verwendet wird. Beispielsweise können die an den Spielgeräten und/oder den Teilnehmern vorgesehenen Speicher mit aktiv sendenden Sendeeinheiten versehen sein, so dass in diesem Fall ein passives Empfangsgerät zum Auslesen bzw. Empfangen der Daten ausreichend ist. Alternativ oder zusätzlich können an den Spielgeräten und/oder den Teilnehmern auch nur passive und auf Anforderung sendende Sendeeinheiten vorgesehen sein, so dass in diesem Fall vorteilhafterweise aktive Lesegeräte zum Auslesen der entsprechenden Daten verwendet werden, die mit entsprechenden Signalen die Speichermittel an den Spielgeräten und/oder Teilnehmern aktiv abfragen.

Insbesondere können als Spielgerätespeicher und/oder als Teilnehmerspeicher jeweils RFID-Elemente verwendet werden, wobei vorteilhafterweise in diesem Fall die genannten Empfangs-/Lesegeräte als RFID-Lesegeräte ausgebildet sind. Die Verwendung derartiger RFID-Elemente und entsprechender RFID-Lesegeräte bewirkt vielerlei Vorteile, u.a. ist keine "Sichtverbindung" zwischen Sender und Empfänger notwendig, weiterhin ist eine hohe Auflösung bei der Positionsortung möglich, d.h. das Auslesen der Daten kann in einfacher Weise nur dann erfolgen, wenn sich der RFID-Tag an der richtigen, dafür vorgesehenen Stelle befindet, und ferner ist es möglich, mit geringen Stromverbrauchswerten zu arbeiten.

Alternativ oder zusätzlich zu solchen RFID-Elementen bzw. RFID-Lesegeräten können als Teilnehmerspeicher bzw. Spielgerätespeicher auch Barcode-Elemente verwendet werden, deren Barcode die jeweilige Information beinhaltet, insbesondere Spielgerätekennung bzw. Teilnehmerkennung. Als Lesegeräte werden dann vorteilhafterweise Barcode-Leser verwendet, mit Hilfe derer die Barcode-Elemente gelesen werden können.

Durch die zuvor genannte Verwendung separater Speicherelemente an den Spielgeräten und den Teilnehmern kann das Einanderzuordnen von Teilnehmern und Spielgeräten kurzfristig vorgegeben und umgestoßen werden, um das Interesse an Manipulationen an einem bestimmten Spielgerät zu eliminieren. Das Rechnersystem zur Überwachung bzw. Steuerung des Spielbetriebs, das Zugriff auf die zumindest eine Datenbank hat, in der die Spielgerätedaten und die Teilnehmerdaten an separaten Speicherplätzen abgelegt sind, ordnet einem bestimmten Teilnehmer ein bestimmtes Spielgerät zu und zeigt dies auf einer Anzeigetafel oder einem anderen geeigneten Anzeigemittel erst kurz vor Start eines Spiels an. Insbesondere kann der Rechner hierfür einen elektronischen Zufallsgenerator aufweisen bzw. mit einem solchen verbunden werden, so dass der Zufallsgenerator die Zuordnung der Spielgerätedaten zu den Teilnehmerdaten automatisch vornimmt, so dass ein bestimmtes Spielgerät zu einem bestimmten Teilnehmer zufallsgesteuert zugeordnet wird.

In Weiterbildung der Erfindung ist eine Überwachungseinrichtung vorgesehen, die es überwacht, ob die von den Zuordnungsmitteln vorgegebene Zuordnung von Teilnehmer und Spielgerät auch eingehalten wird. In Abhängigkeit eines von der Überwachungseinrichtung abgegebenen Überwachungssignals kann beispielsweise das Ereignis freigegeben oder gestoppt werden.

In vorteilhafter Weiterbildung der Erfindung ist zusätzlich oder alternativ eine Überwachungsvorrichtung vorgesehen, die es überwacht, ob ein jeweiliges Spielgerät an der richtigen", ihm vom Rechner zugeordneten Bahn eingesetzt wird. Vorteilhafterweise kann bei Vorhandensein mehrerer Bahnen hierzu jeder Bahn ein Empfangs-/Lesegerät zum Auslesen der Spielgerätedaten aus einem Spielgerätespeicher zugeordnet sein, wobei das genannte Empfangs-/Lesegerät vorteilhafterweise derart ausgebildet ist, dass von dem jeweiligen Gerät nur die Spielgerätedaten desjenigen Spielgeräts ausgelesen werden, das sich auf der jeweiligen Bahn befindet. Vorteilhafterweise können in die Kegelbahnen entsprechende RFID-Lesegeräte integriert sein, beispielsweise unter der Bahnoberfläche angeordnet sein.

Vorteilhafterweise erfolgt eine Zuordnung der in der Datenbank gespeicherten Spielgerätedaten und/oder Teilnehmerdaten zu den Bahnen ebenfalls mittels eines Zufallsgenerators automatisch, wobei die rechnergestützte Zuordnung der Bahnen zu den Spielgerätedaten und/oder zu den Teilnehmerdaten vor Beginn eines Spiels auf dem zuvor schon genannten Anzeigemittel angezeigt wird.

Vorteilhafterweise kann die genannte Überwachungseinrichtung für die Einhaltung der Bahnen eine Freischaltvorrichtung umfassen, die die jeweilige Bahn nur dann freischaltet, wenn die von dem an einer Bahn befindlichen Lesegerät eingelesenen Spielgerätedaten und/oder Teilnehmerdaten der vom Rechner vorgegebenen Zuordnung der Bahnen zu den Spielgeräten und/oder Teilnehmern entspricht. Die genannte Freischaltvorrichtung kann hierbei wiederum in dem zentralen Rechner zur Steuerung des Spielbetriebs vorgesehen sein, um den Betrieb der Bahn dann zu blockieren, wenn das Spielgerät und/oder der Teilnehmer auf der falschen Bahn steht.

In Weiterbildung der Erfindung wird vorteilhafterweise auch eine Überwachung der Geschicklichkeitsspiel-/-sport-Anlage durch geeignete Überwachungsmittel beispielsweise in Form einer oder mehrerer Kamera(s) in Abhängigkeit der aus den Spielgerätespeichern ausgelesenen Spielgerätedaten und/oder in Abhängigkeit der aus den Teilnehmerspeichern ausgelesenen Teilnehmerdaten und/oder der erfolgten Zuordnung dieser Spielgerät- und Teilnehmerdaten variabel gesteuert. Beispielsweise ist die Steuerung dergestalt, dass der Rechner jeweils jene Kamera aktiviert und/oder einsetzt, die den gerade aktiven Teilnehmer eines Spiels im Erfassungsbereich hat. Alternativ oder zusätzlich kann in Abhängigkeit der aus den Spielgerätespeichern ausgelesenen Spielgerätedaten das Umschalten zwischen verschiedenen Kamerapositionen eingestellt werden, wobei insbesondere ein Setup der an der Geschicklichkeitsspiel-/-sport-Anlage vorgesehenen Schaltmittel zum Umschalten der Kamerapositionen in Abhängigkeit der Spielgerätedaten eingestellt werden kann. Beispielsweise können Schaltmittel vorgesehen sein, die die Kameraposition umschalten und/oder eine entsprechende Kamera aktivieren, wenn ein Spielgerät aus dem Spielgerätevorratsraum an der Bahn entnommen oder an die Bahn angenähert wird.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Darstellung einer mehrbahnigen Geschicklichkeitsspiel-/-sport-Anlage in Form einer Kegelbahn, deren Überwachung durch mehrere Kameras und die Anbindung eines Zufallsgenerators, an den mehrere Benutzer- oder Abfrageterminals angebunden sind,
- Fig. 2:: eine schematische Darstellung der Steuerungs- bzw. Überwachungsvorrichtung für den Spielbetrieb auf der Kegelbahn aus Fig. 1, die das Zusammenwirken des zentralen Rechnersystems mit Teilnehmerspeichern und Spielgerätespeichern sowie der Spielsteuerung zeigt, und
- Fig. 3:: eine schematische Darstellung der an einem Benutzerterminal vorsehbaren Auswahlvorrichtung zur Auswahl zumindest einer von mehreren Kegelbahnen zur Ermittlung einer Zufallszahl anhand der Spielergebnisse der zumindest einen ausgewählten Kegelbahn nach einer weiteren vorteilhaften Ausführung der Erfindung.

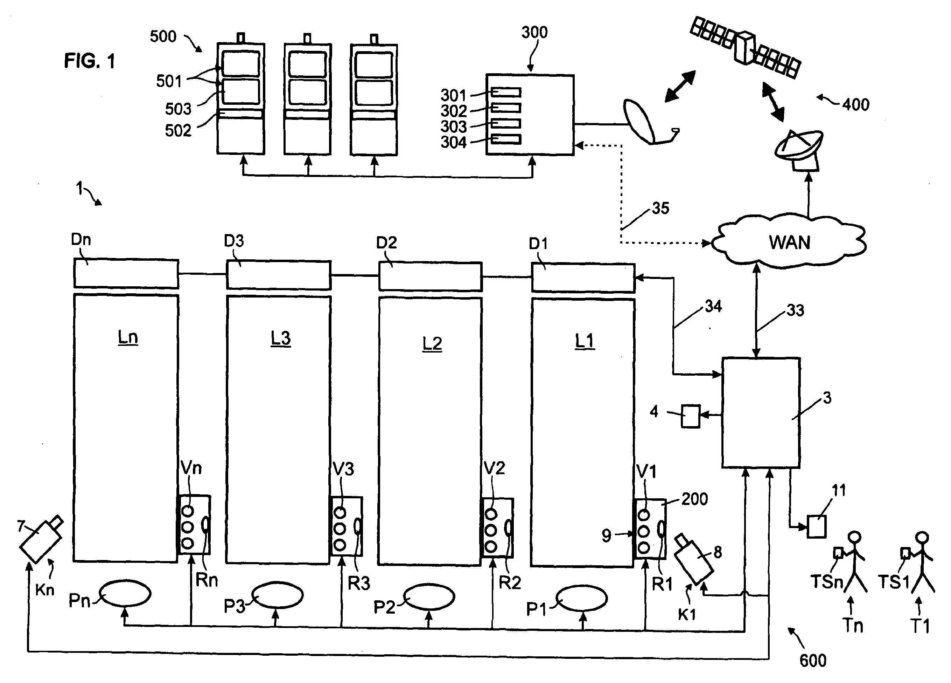

Die in Fig. 1 gezeigte Geschicklichkeitsspiel-/-sport-Anlage 1 umfasst mehrere Bahnen L1, L2, L3, Ln und kann vorteilhafterweise als Kegelbahn-Anlage ausgebildet sein, auf der Spielgeräte V1, V2, V3, Vn in Form von Bowlingkugeln oder Wurfkugeln auf am Ende der Bahnen aufgestellte Kegel bzw. Pins geworfen bzw. gerollt werden.

Wie Fig. 1 zeigt, sind der Geschicklichkeitsspiel-/-sport-Anlage 1 in der gezeichneten Ausführung zwei Kameras 7 und 8 zugeordnet, die verschiedene Abschnitte der Geschicklichkeitsspiel-/-sport-Anlage 1 überwachen, um ein jeweiliges Spiel in Form von Fernsehbildern übertragen zu können.

Vorteilhafterweise können für die Geschicklichkeitsspiel-/-sport-Anlage 1 mehr Teilnehmer mit Hilfe eines zentralen Rechners 3 registriert werden als die Geschicklichkeitsspiel-/-sport-Anlage 1 Bahnen hat. Ist beispielsweise eine KegelbahnAnlage mit vier Bahnen vorgesehen, können beispielsweise acht verschiedene Teilnehmer registriert werden, wobei je Bahn jeweils ein Teilnehmer registriert werden kann, so dass eine Teilmenge der registrierten Teilnehmer in einem Spiel antreten kann. Gegebenenfalls können auch Teams von mehreren Teilnehmern auf jeweils einer Bahn spielen. Je Spielevent können jeweils maximal nur eine bestimmte Anzahl der registrierten Teilnehmer zum Bespielen einer jeweiligen Bahn berechtigt sein, während die für ein Spielevent nicht ausgewählten Teilnehmer eine Pause haben können oder die Möglichkeit zur Steuerung des Systems erhalten können oder anderen Aufgaben wie dem Bahnservice und/oder dem Aufstellen der Kegel zugeteilt sein können.

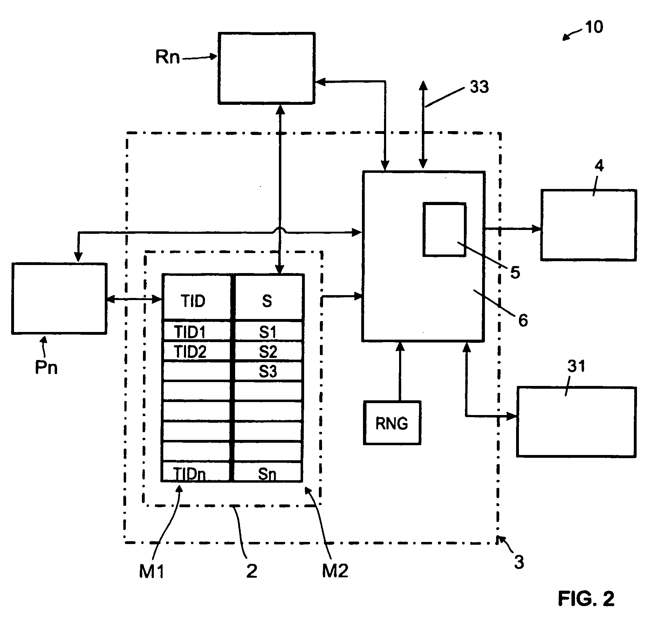

Zum einen wird zunächst jedem der Teilnehmer T1, Tn ein Teilnehmerspeicher TS1, TSn vorzugsweise in Form einer RFID-Karte mit einer jeweiligen Teilnehmerkennung TID1, TIDₙ zugeordnet, wobei vor dem Spielbetrieb ein Registrieren der jeweiligen Teilnehmer erfolgt, indem ein geeignetes Empfangs- und/oder Lesegerät beispielsweise in Form eines RFID-Readers den jeweiligen Teilnehmerspeicher TS1, TSn ausliest, wobei die jeweils zugehörige Teilnehmerkennung TID ermittelt und diese in einem ersten Speicherbereich M1 einer zentralen Datenbank 2 gespeichert wird, vgl. Fig. 2.

Weiterhin werden die Spielgeräte V1, V2, V3, Vn mit einem jeweiligen Spielgerätespeicher vorzugsweise in Form eines RFID-Elements versehen, denen eine jeweilige Spielgerätekennung S1, S2, S3, Sn zugeordnet ist. In einem weiteren Schritt erfolgt ebenfalls vor dem Spielbetrieb ein Registrieren der Spielgerätekennungen, indem mittels eines geeigneten Empfangs- bzw. Lesegeräts die Spielgerätespeicher ausgelesen werden, wobei die Spielgerätekennungen S1, S2, S3, Sn ermittelt und auf die genannte Datenbank 2 übermittelt werden, wo sie in einem zweiten Speicherbereich M2 abgelegt werden, vgl. Fig. 2.

Vorzugsweise können hierbei mehrere Sätze von Spielgeräten registriert werden, wobei je Spiel nur einer der Spielgerätesätze zum Einsatz kommt, während der andere Kugelsatz als Ersatz, nach einer bestimmten Anzahl an Spielen oder einer bestimmten Zeit zum Auswechseln herangezogen werden kann.

Nach erfolgter Registrierung der Spielgeräte V1, V2, V3, Vn und der Teilnehmer T1, Tn nimmt der zentrale Rechner 3 die Zuordnung der Teilnehmer zu den Spielgeräten vor Spielbeginn automatisch vor und zeigt diese Zuordnung auf einer Anzeige 4 an. Wie Fig. 2 zeigt, kann der Rechner 3 hierzu einen Zufallsgenerator RNG aufweisen, der die Zuordnung der Teilnehmer zu den Spielgeräten zufallsgestützt vornimmt.

Vorteilhafterweise nimmt der Rechner 3 auch automatisch eine Zuordnung der Spielgeräte zu den jeweiligen Bahnen vor, wobei vorteilhafterweise auch diese Zuordnung zu den Bahnen von dem Zufallsgenerator RNG zufallsgestützt vorgenommen werden kann. Auch diese Zuordnung wird vor Spielbeginn auf der Anzeige 4 angezeigt.

Entsprechend der auf der Anzeige 4 vorgegebenen Zuordnung und Auswahl sind sodann die Spielgeräte V1, V2, V3, Vn an den entsprechenden Bahnen L1, L2, L3, Ln der Geschicklichkeitsspiel-/-sport-Anlage 1 zu registrieren. Dies wird beispielsweise mittels der an den Kugeln vorgesehenen jeweiligen Spielgerätespeicher überwacht, wobei vorteilhafterweise den jeweiligen Bahnen L1, L2, Ln Empfangs/Lesegeräte R1, R2, R3, Rn zugeordnet sind, beispielsweise bei einem der jeweiligen Bahn zugeordneten Kugel-Reservoir 200 angebracht sind, um den Spielgerätespeicher der Kugeln auszulesen. Die genannten Empfangs-/Lesegeräte R1, R2, R3, Rn überprüfen die Spielgerätekennung S1, S2, S3, Sn und geben diese an eine Freischaltvorrichtung 5 weiter, die im Rechner 3 angeordnet sein kann. Steht der richtige Teilnehmer mit der richtigen Kugel an der richtigen Bahn, wird die entsprechende Bahn und die entsprechende Kugel am Kugelspeicher 200 freigeschaltet.

Hierzu werden an den Bahnen mittels dort vorgesehener Empfangs-/Lesegeräte P1, P2, Pn auch noch die Teilnehmerspeicher TS1, TS2, TSn der jeweiligen Teilnehmer ausgelesen. Dies kann beispielsweise dadurch erfolgen, dass der jeweilige Teilnehmer seine RFID-Karte in das entsprechende Lesegerät P1, P2, P3, Pn steckt oder in kontaktlose Kommunikation bringt. Die ausgelesenen Teilnehmerkennungen TID1, TID2, TIDₙ werden sodann ebenfalls an die genannte Freischaltvorrichtung 5 gesandt, um dort mit der vom Rechner 3 vorgegebenen Zuordnung gemäß der Anzeige 4 nach Fig. 2 verglichen zu werden. Ist der richtige Teilnehmer an der richtigen Bahn, wird die jeweilige Bahn bzw. das dieser zugeordnete Kegelaufstellgerät D1, D2, D3, Dn freigeschalten. Die jeweiligen Kegelaufstellgeräte D1, D2, D3, Dn können über eine drahtgebundene und/oder kabellose Datenverbindung 34 mit dem Rechner 3 verbunden sein.

Sind alle Teilnehmer an den vorbestimmten Bahnen und sind alle Spielgeräte V1, V2, V3, Vn an den richtigen Bahnen, kann der Rechner 3 ein entsprechendes Startsignal generieren, das in geeigneter Weise zur Anzeige gebracht wird, beispielsweise ebenfalls auf der Anzeige 4.

Je nachdem, welcher Teilnehmer aktiv wird und eine Bahn bespielt, wird die entsprechende Kamera 7 oder 8 aktiviert, um den Versuch zu übertragen. Vorteilhafterweise kann das Umschalten der genannten Kameras 7, 8 in Abhängigkeit der ausgelesenen Spielgerätekennungen gesteuert werden. Werden beispielsweise an dem Kugelspeicher 200 der Geschicklichkeitsspiel-/-sport-Anlage 1 Schaltmittel 9, 10 vorgesehen, die das Herausnehmen eines jeweiligen Spielgeräts V1, V2, Vn erfassen, können die entsprechenden Kameras 7, 8 in Betrieb gesetzt bzw. das davon bereitgestellte Bild zur Übertragung freigegeben werden, wobei beispielsweise der Kamerablickwinkel von dem Rechner 3 auf die Bahn gerichtet werden kann, an der eine Kugel aus dem Kugelspeicher 200 genommen wurde.

Vorteilhafterweise kann vor jedem Spiel und/oder nach Abhalten einer vorbestimmten Anzahl von Spielen eine neuerliche Ermittlung einer Kombination Teilnehmer<->Spielgerät<->Bahn stattfinden, wobei auch aus allen registrierten Teilnehmern gewählt werden kann. Vorteilhafterweise nimmt dies der Rechner 3 automatisch vor. Durch die genannte neuerliche Ermittlung der Teilnehmer, der Spielgeräte und der Bahnen und deren Zuordnung zueinander erhöht sich die Sicherheit gegen Manipulationen oder Absprachen.

Die Abfrage- bzw. Benutzerterminals 500, die eine Nutzung des Zufallszahlengenerators und Abfrage einer Zufallszahl erlauben und mit der Spielanlage in Verbindung stehen, besitzen vorteilhafterweise eine Anzeigevorrichtung 501 beispielsweise in Form eines oder mehrerer Bildschirme, eine Eingabevorrichtung 502, beispielsweise in Form einer Tastatur oder eines Berührungsbildschirms bzw. Touchscreens, um Befehle in das Gerät eingeben zu können, sowie eine Bestimmungsvorrichtung 301 zur Ermittlung von Zufallszahlen bzw. Zufallszahlenkombinationen, wobei die genannte Bestimmungsvorrichtung 301 unmittelbar im Benutzerterminal 500, aber auch vorteilhafterweise in einem damit verbundenen, separaten Server 300 vorgesehen sein kann, der vorteilhafterweise mehrere Benutzerterminals 500 ansteuern und mit der Geschicklichkeitsspielstätte 1 verbinden kann. Wie Fig. 1 zeigt, kann der zentrale Rechner 3, der die Überwachung der Kegelbahnen und den Spielbetrieb auf den Kegelbahnen steuert, über eine Datenfernverbindung beispielsweise in Form einer Satellitenkommunikationsverbindung 400 mit dem zentralen Server 300 kommunizieren.

Die Ermittlung der Zufallszahl erfolgt in der beschriebenen Weise durch ein Spiel auf der Kegelbahnanlage 1, wobei beispielsweise vorgesehen sein kann, dass die Zufallszahl aus mehrere Spielergebnissen errechnet wird, beispielsweise dergestalt, dass jeweils ein Versuch auf jeder der vier Bahnen berücksichtigt wird und sodann die Trefferzahlen der auf jeder Bahn unternommenen Versuche addiert werden. In dem gezeigten Beispiel wurde die Zufallszahl 16 ermittelt, da auf der ersten Bahn sieben Kegel, auf der zweiten Bahn zwei Kegel, auf der dritten Bahn vier Kegel und auf der vierten Bahn drei Kegel, d.h. zusammen insgesamt sechzehn Kegel umgeworfen wurden.

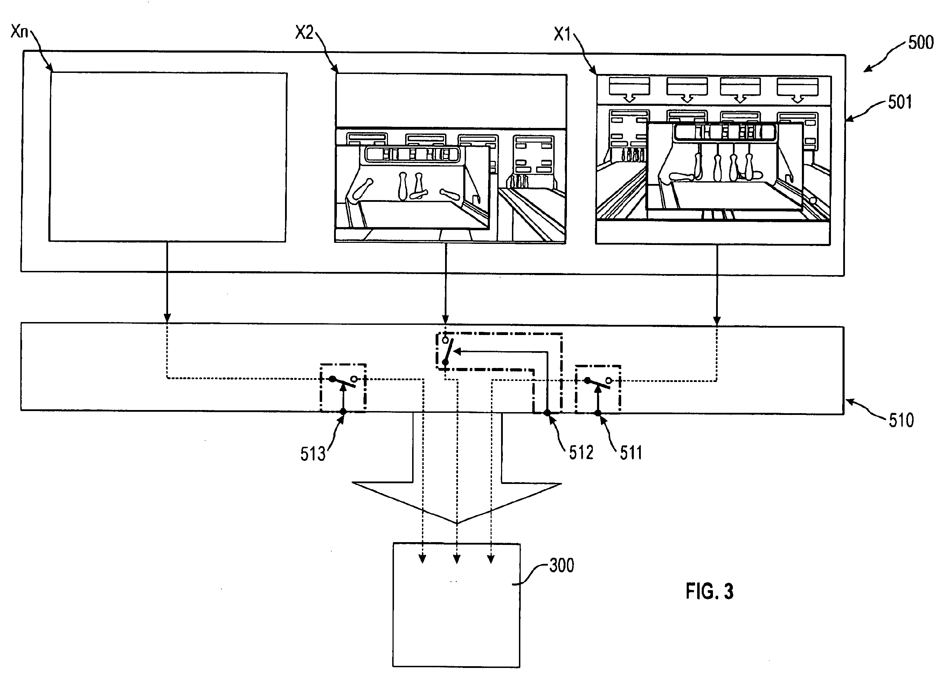

In vorteilhafter Weiterbildung der Erfindung kann auch vorgesehen sein, dass für die Ermittlung unterschiedlicher Zufallszahlen oder die Ermittlung der Belegung der Zahlenplätze einer Zufallszahlenkombination verschiedene Geschicklichkeitsspiel-/- sport-Anlagen 1 herangezogen werden. Beispielsweise können auf dem Bildschirm 501 eines Abfrage- bzw. Benutzerterminals 500 verschiedene Kegelbahnen an verschiedenen Orten, beispielsweise eine erste Kegelbahn in Wien, eine zweite Kegelbahn in München und eine dritte Kegelbahn in Mailand angezeigt werden, wobei der dort erfolgende Spielablauf beispielsweise über entsprechende Kameras angezeigt werden kann. An dem Benutzerterminal 500 kann vorteilhafterweise eine Auswahlvorrichtung 510 beispielsweise in Form eines Touchscreens vorgesehen sein, um es dem Benutzer zu ermöglichen, eine gewünschte Kegelbahn für die Ermittlung "seiner" Zufallszahlen auszuwählen. In der in Fig. 3 gezeigten Ausführung können hierbei verschiedene Kegelbahnen bzw. Geschicklichkeitsspiel-/-sport-Anlagen X1, X2, Xn ausgewählt werden, um eine oder mehrere Zufallszahlen zu bestimmen. So kann im vorliegenden Fall die Geschicklichkeitsspiel-/-sport-Anlage X1 über eine Auswahlsteuerung 511 ausgewählt beziehungsweise aktiviert werden, die Anlage X2 über eine Auswahlsteuerung 512 und die Anlage Xn über eine Auswahlsteuerung 513. Die Spielergebnisse aus den ausgewählten Spielstätten können in der vorgenannten Weise entsprechend einer vorbestimmten Berechnungsvorschrift zur Bestimmung, beispielsweise Aufsummierung, einer oder mehrerer Zufallszahlen verwendet werden. Gleichfalls kann die Berechnungsvorschrift eine Subtraktion, Multiplikation, Division oder eine Kombination hiervon aufweisen.

Die Auswahlvorrichtung 510 kann alternativ zur Konfiguration auf einem Konfigurationsserver vorgesehen sein. Weiters kann die Auswahlvorrichtung 510 als Webinterface ausgebildet sein, das über einen Web-Browser bedienbar und/oder konfigurierbar ist und die entsprechend konfigurierten und/oder ausgewählten Daten der verschiedenen Kegelbahnen bzw. Geschicklichkeitsspiel-/-sport-Anlagen X1, X2, Xn als Zufallszahl(en) weitergeben kann.

## Patentansprüche

1. Zufallszahlengenerator zur Bereitstellung einer Zufallszahl und/oder einer Zufallszahlenkombination und/oder einer Zufallszahlenmatrix über ein Interface; **gekennzeichnet durch**
- eine Überwachungsvorrichtung (600) zur Überwachung einer Geschicklichkeitsspiel-/-sport-Anlage (1), an der ein Geschicklichkeitsspiel/- sport **durch** zumindest einen Teilnehmer ausführbar ist, das zumindest ein Spielergebnis als Zahlenwert liefert, wobei die Überwachungsvorrichtung (600) Spielergebnisbestimmungsmittel (101) zum Bestimmen des Spielergebnisses umfasst, und
- eine Bestimmungseinrichtung (301) zur Bestimmung der Zufallszahl und/oder Zufallszahlenkombination und/oder -matrix aus dem bestimmten Spielergebnis zur Bereitstellung an das Interface zur Abfrage **durch** eine Anwendung, wobei
die Bestimmungseinrichtung (301) eine Berechnungseinrichtung zur Berechnung einer Zufallszahl aus mehreren jeweils Spielergebnisse bildenden Zahlenwerten entsprechend einer vorgebbaren Rechenvorschrift und/oder eine Zuordnungsvorrichtung zur Zuordnung der einzelnen Zahlenwerte oder der daraus berechneten Zahlen auf jeweils einen Zahlenplatz der Zufallszahlenfolge oder -matrix entsprechend einer vorgebbaren Zuordnungsvorschrift umfasst
- zumindest ein Bildschirm zur Anzeige von Bildaufnahmen, die von Kameras (7, 8) an der Geschicklichkeitsspiel-/-sport-Anlage (1) aufgenommen sind.

2. Zufallszahlengenerator nach dem vorhergehenden Anspruch, wobei die Geschicklichkeitsspiel-/-sport-Anlage (1) eine Kegelbahn-, Bowlingbahn-, Dart- oder Schießstand-Anlage ist.

3. Zufallszahlengenerator nach einem der vorhergehenden Ansprüche, wobei die Überwachungsvorrichtung (600) Überwachungsmittel zur Überwachung mehrerer Bahnen der Geschicklichkeitsspiel-/-sport-Anlage umfasst und die Bestimmungseinrichtung (301) die Zufallszahl und/oder Zufallszahlenkombination und/oder -matrix aus den Spielergebnissen von verschiedenen Bahnen bestimmt, vorzugsweise die Ergebnisse von verschiedenen Bahnen jeweils einem Zahlenplatz einer Zufallszahlenfolge und/oder die Ergebnisse von verschiedenen Bahnen aus verschiedenen Durchgängen/Versuchen den Zeilen und Spalten einer Zufallszahlenmatrix zuordnet.

4. Zufallszahlengenerator nach dem vorhergehenden Anspruch, wobei ein elektronischer Zufallsgenerator (RNG) zur Zuordnung der Teilnehmer zu den mehreren Bahnen vorgesehen ist.

5. Zufallszahlengenerator nach einem der vorhergehenden Ansprüche, wobei mehrere Überwachungsvorrichtungen (600) zur Überwachung mehrerer Geschicklichkeitsspiel-/-sport-Anlagen (1) sowie eine Auswahlvorrichtung (510) zur Auswahl zumindest einer Überwachungsvorrichtung (600) vorgesehen sind, wobei die Bestimmungseinrichtung (301) die Zufallszahl und/oder Zufallszahlenkombination und/oder Zufallszahlenmatrix aus dem Spielergebnis der von der ausgewählten Überwachungsvorrichtung (600) überwachten Geschicklichkeitsspiel-/-sport-Anlage (1) bestimmt, wobei die Auswahlvorrichtung (510) vorzugsweise Eingabemittel zur Auswahl einer gewünschten Geschicklichkeitsspiel-/-sport-Anlage (1) durch einen Benutzer aufweist.

6. Zufallszahlengenerator nach dem vorhergehenden Anspruch, wobei die Auswahlvorrichtung (510) Zuordnungsmittel zur Zuordnung einer jeweils ausgewählten Geschicklichkeitsspiel-/-sport-Anlage (1) zu jeweils einem Zahlenplatz einer Zufallszahlenfolge und/oder -matrix aufweist.

7. Zufallszahlengenerator nach einem der vorhergehenden Ansprüche, wobei an der Geschicklichkeitsspiel-/-sport-Anlage (1) verwendbare Spielgeräte (V1, V2, Vn) jeweils mit einem Spielgerätespeicher (S1, S2, Sn) versehen sind, in dem Spielgerätedaten gespeichert sind, welche Spielgerätedaten von einem der Geschicklichkeitsspiel-/-sport-Anlage (1) zugeordneten Empfangs-/Lesegerät (R1, R2, Rn) ausgelesen und in eine Datenbank (2) gespeichert werden.

8. Zufallszahlengenerator nach dem vorhergehenden Anspruch, wobei für jeden Spielteilnehmer ein vom Spielgerätespeicher (S1, S2, Sn) separater Teilnehmerspeicher (TS1, TS2, TSn) vorgesehen ist, in dem Teilnehmerdaten abgespeichert sind, wobei die Teilnehmerdaten von dem genannten oder einem weiteren Empfangs-/Lesegerät (P1, P2, Pn) ausgelesen und in der und/oder einer weiteren Datenbank (2) abgelegt werden, und wobei die in der oder den Datenbank(en) gespeicherten Spielgerätedaten und Teilnehmerdaten mit Hilfe von Zuordnungsmitteln (3) einander zugeordnet werden und wobei ein erneutes Auslesen von Spielgerätedaten und Teilnehmerdaten durchgeführt wird und ein Überprüfen der zugeordneten Daten stattfindet.

9. Zufallszahlengenerator nach einem der beiden vorhergehenden Ansprüche, wobei als Spielgerätespeicher (S1, S2, Sn) und/oder als Teilnehmerspeicher (TS1, TS2, TSn) jeweils RFID-Elemente und als Empfangs-/Lesegerät (R1, R2, Rn; P1, P2, Pn) ein RFID-Lesegerät vorgesehen sind.

10. Zufallszahlengenerator nach einem der vorhergehenden Ansprüche, wobei die Zuordnung der Spielgerätedaten zu den Teilnehmerdaten mittels eines elektronischen Zufallsgenerators (RNG) automatisch vorgenommen wird und die Zuordnung der Spielgerätedaten zu den Teilnehmerdaten vor Beginn eines Spiels auf einer Anzeige (4) angezeigt wird.

11. Zufallszahlengenerator nach einem der vorhergehenden Ansprüche, wobei bei Vorhandensein mehrerer Bahnen (L 1, L2, Ln) jede Bahn mit einem Empfangs-/Lesegerät (R1, R2, Rn) zum Einlesen der Spielgerätedaten aus einem Spielgerätespeicher (S1, S2, Sn) versehen ist, wobei von dem jeweiligen Empfangs-/Lesegerät (R1, R2, Rn) die Spielgerätedaten nur des Spielgeräts (V1, V2, Vn), das sich an der jeweiligen Bahn (L 1, L2, Ln) befindet, ausgelesen werden.

12. Zufallszahlengenerator nach dem vorhergehenden Anspruch, wobei eine Zuordnung der in der Datenbank (2) gespeicherten Spielgerätedaten zu den Bahnen (L 1, L2, Ln) mittels eines Zufallsgenerators automatisch vorgenommen wird und die Zuordnung der Bahn (L 1, L2, Ln) zu den Spielgerätedaten und/oder zu den Teilnehmerdaten vor Beginn eines Spiels auf dem Anzeigemittel (4) angezeigt wird.

13. Zufallszahlengenerator nach dem vorhergehenden Anspruch, wobei von einer Freischaltvorrichtung (5) die jeweilige Bahn (L 1, L2, Ln) nur dann freigeschalten wird, wenn die von dem an einer Bahn (L 1, L2, Ln) befindlichen Lesegerät (R1, R2, Rn) eingelesenen Spielgerätedaten der von Zuordnungsmitteln (3) vorgegebenen Zuordnung der Bahnen (L 1, L2, Ln) zu den Spielgeräten (V1, V2, Vn) entsprechen.

14. Zufallszahlengenerator nach einem der vorhergehenden Ansprüche, wobei einer Überwachung der Geschicklichkeitsspiel-/-sport-Anlage (1) durch zumindest eine Kamera (K1, K2, Kn) in Abhängigkeit der aus den Spielgerätespeichern (S1, S2, Sn) ausgelesenen Spielgerätedaten und/oder der erfolgten Zuordnung der genannten Spielgerätedaten zu den aus den Teilnehmerspeichern (TS1, TS2, TSn) ausgelesenen Teilnehmerdaten gesteuert wird.

15. Zufallszahlengenerator nach dem vorhergehenden Anspruch, wobei die Geschicklichkeitsspiel-/-sport-Anlage (1) durch mehrere Kameras (K1, K2, Kn) überwacht wird, wobei ein Umschalten, insbesondere die Umschaltzeitpunkte, zwischen den verschiedenen Kameras (K1, K2, Kn) in Abhängigkeit der aus den Spielgerätespeichern (S1, S2, Sn) ausgelesenen Spielgerätedaten gesteuert wird.

16. Zufallszahlengenerator nach einem der vorhergehenden Ansprüche, wobei ein Spielstartsignal zur Anzeige des Spielbeginns automatisch von einer Startvorrichtung dann erzeugt wird, wenn anhand eines Abgleichs der aus den Spielgerätespeichern (S1, S2, Sn) ausgelesenen Spielgerätedaten und der aus den Teilnehmerspeichern (TS1, TS2, TSn) ausgelesenen Teilnehmerdaten mit der vom Rechner (3) generierten Zuordnung der Spielgeräte-daten zu den Teilnehmerdaten und/oder der Zuordnung der Spielgerätedaten zu den Bahnen (L 1, L2, Ln) der Geschicklichkeitsspiel-/-sport-Anlage (1) festgestellt wurde, dass die tatsächliche Positionierung der Teilnehmerspeicher (TS1, TS2, TSn) an den Steuerungsgeräten (C1, C2, Cn) der Spielgeräte (V1, V2, Vn) und/oder die tatsächliche Aufstellung der Spielgeräte (V1, V2, Vn) an den Bahnen (L 1, L2, Ln) der jeweiligen rechnergenerierten Zuordnung entspricht.

17. Zufallszahlengenerator nach einem der vorhergehenden Ansprüche, wobei der zumindest eine Bildschirm zur Anzeige von Bildaufnahmen, die von Kameras (7, 8) an der Geschicklichkeitsspiel-/-sport-Anlage (1) aufgenommen sind, an einer von einer Eingabevorrichtung (502) aus einsehbaren Position angeordnet ist.

## Claims

1. Random-number generator for the provision of a random number and/or a random-number combination and/or a random-number matrix via an interface, **characterised by**
- a monitoring device (600) for monitoring a game-of-skill/sport facility (1), on which a game-of-skill/sport can be played by at least one participant, which delivers at least one game result as a numerical value, wherein the monitoring device (600) comprises game-result determining means (101) for determining the game result, and
- a determining device (301) for determining the random number and/or random-number combination and/or -matrix from the determined game result for delivery to the interface for interrogation by an application, wherein
the determining device (301) comprises a computation apparatus for the computation, according to a predetermined calculation specification, of a random number from several numerical values each forming game results and/or an allocation device for allocating the individual numerical values or the numbers calculated from them in each case to a numerical position of the random-number sequence or -matrix corresponding to a predetermined allocation specification
- at least one screen for the display of the image recording, which were recorded by cameras (7, 8) on the game-of-skill/sport facility (1).

2. Random-number generator according to the preceding claim, wherein the game-of-skill/sport facility (1) is a bowling alley, bowling lane, darts game or shooting-range facility.

3. Random-number generator according to one of the preceding claims, wherein the monitoring device (600) comprises monitoring means for the monitoring of several lanes of the game-of-skill/sport facility, and the determining device (301) determines the random number and/or random-number combination and/or -matrix from the game results from different lanes, preferably allocates the results from different lanes in each case to a numerical position of a random-number sequence and/or the results of different lanes from different throws/attempts to the rows and columns of a random-number matrix.

4. Random-number generator according to the preceding claim, wherein an electronic random-number generator (RNG) is provided for the allocation of the participants to the several lanes.

5. Random-number generator according to one of the preceding claims, wherein several monitoring devices (600) for the monitoring of several game-of-skill/sport facilities (1) and a selection device (510) for the selection of at least one monitoring device (600) are provided, wherein the determining device (301) determines the random number and/or random-number combination and/or random-number matrix from the game result of the game-of-skill/sport facility (1) monitored by the selected monitoring device (600), wherein the selection device (510) preferably comprises input means for the selection of a desired game-of-skill/sport facility (1) by a user.

6. Random-number generator according to the preceding claim, wherein the selection device (510) comprises allocation means for the allocation of a respectively selected game-of-skill/sport facility (1) in each case to one numerical position of a random-number sequence and/or -matrix.

7. Random-number generator according to one of the preceding claims, wherein game devices (V1, V2, Vn) capable of being used in the game-of-skill/sport facility (1) are each provided with a game equipment memory (S1, S2, Sn), in which game-device data are buffered, which game-device data are read out by a receiver/reader device (R1, R2, Rn) allocated to the game-of-skill/sport facility (1) and stored in a databank (2).

8. Random-number generator according to the preceding claim, wherein a separate participant memory (TS1, TS2, TSn) separate from the game equipment memory (S1, S2, Sn) is provided for each game participant, in which participant data are buffered, wherein the participant data are read out by the named or by another receiver/reader device (PI, P2, Pn) and stored in the databank (2) and/or in a further databank (2), and wherein the game-device data and participant data stored in the databank or the databanks are allocated to one another with the assistance of allocation means (3) and wherein a renewed reading out of game-device data and participant data is implemented and a checking of the allocated data takes place.

9. Random-number generator according to one of the two preceding claims, wherein RFID elements, in each case as game equipment memory (S1, S2, Sn) and/or as participant memory (TS1, TS2, TSn), and an RFID reader device, as receiver/reader device (R1, R2, Rn; P1, P2, Pn), are provided.

10. Random-number generator according to one of the preceding claims, wherein the allocation of the game-device data to the participant data is implemented automatically by means of an electronic random generator (RNG), and the allocation of the game-device data to the participant data is displayed before the start of the game on a display (4).

11. Random-number generator according to one of the preceding claims, wherein, in the presence of several lanes (L1, L2, Ln), each lane is provided with a receiver/reader device (R1, R2, Rn) for reading in the game-device data from a game equipment memory (S1, S2, Sn), wherein only the game-device data of the game device (V1, V2, Vn) which is disposed on the respective lane (L1, L2, Ln) are read out by the respective receiver/reader device (R1, R2, Rn).

12. Random-number generator according to the preceding claim, wherein an allocation of the game-device data stored in the databank (2) to the lanes (L1, L2, Ln) is implemented automatically by means of a random generator, and the allocation of the lane (L1, L2, Ln) to the game-device data and/or to the participant data is displayed before the beginning of a game on the display means (4).

13. Random-number generator according to the preceding claim, wherein the respective lane (L1, L2, Ln) is released by a release device (5) only when the game-device data read in by the reader device (R1, R2, Rn) disposed on one lane (L1, L2, Ln) correspond to the allocation specified by allocation means (3) of the lanes (L 1, L2, Ln) to the game devices (V1, V2, Vn).

14. Random-number generator according to one of the preceding claims, wherein a monitoring of the game-of-skill/sport facility (1) is controlled by at least one camera (K1, K2, Kn) dependent upon the game-device data read out from the game equipment memory s (S1, S2, Sn) and/or the completed allocation of the named game-device data to the participant data read out from the participant buffers (TS1, TS2, TSn).

15. Random-number generator according to the preceding claim, wherein the game-of-skill/sport facility (1) is monitored by several cameras (K1, K2, Kn), wherein a switching, especially the switching times, between the different cameras (K1, K2, Kn) is controlled dependent upon the game-device data read out from the game equipment memory (S1, S2, Sn).

16. Random-number generator according to one of the preceding claims, wherein a game start signal for the display of the start of the game is generated automatically by a start device, when it has been established, on the basis of a comparison of the game-device data read out from the game equipment memory (S1, S2, Sn) and the participant data read out from the participant buffer (TS1, TS2, TSn) with the allocation generated by the computer (3) of the game-device data to the participant data and/or the allocation of the game-device data to the lanes (L1, L2, Ln) of the game-of-skill/sport facility (1), that the actual positioning of the participant memory (TS1, TS2, TSn) on the control devices (C1, C2, Cn) of the game devices (V1, V2, Vn) and/or the actual location of the game devices (V1, V2, Vn) on the lanes (L1, L2, Ln) corresponds to the respective computer-generated allocation.

17. Random-number generator according to one of the preceding claims, wherein the at least one screen for the display of images which are taken by cameras (7, 8) in the game-of-skill/sport facility (1) is arranged at a position visible from an input device (502).

## Revendications

1. Générateur de nombres aléatoires pour générer un nombre aléatoire et/ou une combinaison de nombres aléatoires et/ou une matrice de nombres aléatoires par l'intermédiaire d'une interface ; **caractérisé par**
- un appareil de surveillance (600) permettant de surveiller une installation de jeu d'adresse/de sport d'adresse (1), dans laquelle au moins un participant peut se livrer à un jeu d'adresse/un sport d'adresse, fournissant au moins un résultat de jeu sous forme de valeur chiffrée, où l'appareil de surveillance (600) comporte des moyen de détermination de résultat de jeu (101) permettant de déterminer le résultat de jeu, et
- un dispositif de détermination (301) permettant de déterminer le nombre aléatoire et/ou la combinaison de nombres aléatoires et/ou la matrice de nombres aléatoires à partir du résultat de jeu déterminé pour présentation au niveau de l'interface pour consultation à travers une application, où
le dispositif de détermination (301) comporte un dispositif de calcul permettant de calculer un nombre aléatoire à partir de plusieurs valeurs chiffrées formant respectivement des résultats de jeu selon une règle de calcul paramétrable et/ou un appareil d'affectation permettant d'affecter les diverses valeurs chiffrées ou les valeurs calculées à partir de celles-ci à une position de nombre respective de la séquence de nombres aléatoires ou de la matrice de nombres aléatoires selon une règle d'affectation paramétrable,
- au moins un écran pour afficher les images enregistrées par les caméras (7, 8) au niveau de installation de jeu d'adresse/de sport d'adresse (1).

2. Générateur de nombres aléatoires selon la revendication précédente, où installation de jeu d'adresse/de sport d'adresse (1) est consacrée aux quilles, au bowling, aux fléchettes ou au tir.

3. Générateur de nombres aléatoires selon l'une des revendications précédentes, où l'appareil de surveillance (600) comprend des moyens de surveillance permettant de surveiller plusieurs pistes de l'installation de jeu d'adresse/de sport d'adresse et le dispositif de détermination (301) détermine le nombre aléatoire et/ou la combinaison de nombres aléatoires et/ou la matrice de nombres aléatoires à partir des résultats de jeu de différentes pistes, affecte de préférence les résultats de différentes pistes respectivement à une positon de nombre d'une séquence de nombres aléatoires et/ou les résultats de différentes pistes à partir de différents cycles/différentes tentatives, aux lignes et colonnes d'une matrice de nombres aléatoires.

4. Générateur de nombres aléatoires selon la revendication précédente, où un générateur aléatoire électronique (GAE) est prévu pour affecter les participants aux plusieurs pistes.

5. Générateur de nombres aléatoires selon l'une des revendications précédentes, où plusieurs appareils de surveillance (600) sont prévus pour surveiller plusieurs installations de jeu d'adresse/de sport d'adresse (1) de même qu'un appareil de sélection (510) permettant de sélectionner au moins un appareil de surveillance (600), où le dispositif de détermination (301) détermine le nombre aléatoire et/ou la combinaison de nombres aléatoires et/ou la matrice de nombres aléatoires à partir du résultat de jeu de installation de jeu d'adresse/de sport d'adresse (1) surveillée par l'appareil de surveillance (600) sélectionné, où l'appareil de sélection (510) présente de préférence des moyens de saisie permettant à un utilisateur de sélectionner une installation de jeu d'adresse/de sport d'adresse (1) souhaitée.

6. Générateur de nombres aléatoires selon la revendication précédente, où l'appareil de sélection (510) présente des moyens d'affectation permettant d'affecter une installation de jeu d'adresse/de sport d'adresse (1) sélectionnée respectivement à une position de nombre d'une séquence de nombres aléatoires et/ou d'une matrice de nombres aléatoires respectivement.

7. Générateur selon l'une quelconque des revendications précédentes, où des consoles de jeu (V1, V2, Vn) utilisables, respectivement pourvues d'une mémoire de consoles de jeu (S1, S2, Sb) sont prévues dans installation de jeu d'adresse/de sport d'adresse (1), mémoire stockant les données de consoles de jeu, lesquelles données de consoles de jeu sont lues par un appareil de réception/de lecture (R1, R2, Rn) affecté à installation de jeu d'adresse/de sport d'adresse (1) et stockées dans une banque de données (2).

8. Générateur de nombres aléatoires selon la revendication précédente, où une mémoire de participants (TS1, TS2, TSn) séparée de la mémoire des consoles de jeu (S1, S2, Sn) est prévue pour le participant au jeu du moment, mémoire de participants dans laquelle les données de participants sont stockées, où les données de participants sont lues par l'appareil de réception/de lecture (P1, P2, Pn) mentionné ou un autre appareil de réception/de lecture, puis stockées la banque de données (2) et/ou une autre banque de données (2), et où les données de consoles de jeu et les données de participants stockées dans la ou les banques de données sont affectées les unes aux autres à l'aide de moyens d'affectation (3) et où les données de consoles de jeu et les données de participants sont de nouveau lues et les données affectées sont soumises à une vérification.

9. Générateur selon l'une des deux revendications précédentes, où des éléments RFID sont prévus en guise de mémoire de consoles de jeu (S1, S2, Sn) et/ou de mémoire de participants (TS1, TS2, TSn) respectivement et un appareil de lecture RFID est prévu en guise d'appareil de réception/de lecture (R1, R2, Rn; P1, P2, Pn).

10. Générateur selon l'une quelconque des revendications précédentes, où l'affectation des données de consoles de jeu aux données de participants se déroule automatiquement à l'aide d'un générateur aléatoire électronique (GAE) et l'affectation des données de consoles de jeu aux données de participants est affichée sur un écran (4) au début d'une partie.

11. Générateur selon l'une quelconque des revendications précédentes, où en cas de présence de plusieurs pistes (L 1, L2, Ln), chaque piste est pourvue d'un appareil de réception/lecteur (R1, R2, Rn) permettant de lire les données de consoles de jeu à partir d'une mémoire de consoles de jeu (S1, S2, Sn), où seuls vont être lues par l'appareil de réception/de lecture (R1, R2, Rn) respectif les données de consoles de jeu de la console de jeu (V1, V2, Vn) située sur la piste respective (L 1, L2, Ln).

12. Générateur de nombres aléatoires selon la revendication précédente, où l'affectation des données de consoles de jeu stockées dans la banque de données (2) aux pistes (L 1, L2, Ln) à l'aide d'un générateur aléatoire est réalisée automatiquement et l'affectation de la piste (L 1, L2, Ln) aux données de consoles de jeu et/ou aux données de participants est affichée avant le début d'une partie sur le moyen d'affichage (4).

13. Générateur de nombres aléatoires selon la revendication précédente, où un appareil de déblocage (5) va seulement débloquer la piste respective (L 1, L2, Ln) si les données de consoles de jeu lues par l'appareil de lecture (R1, R2, Rn) située sur une piste (L 1, L2, Ln) correspondent à l'affectation des pistes (L 1, L2, Ln) par rapport aux consoles de jeu (V1, V2, Vn), affectation prédéterminée par les moyens d'affectation (3).

14. Générateur selon l'une quelconque des revendications précédentes, où une surveillance de installation de jeu d'adresse/de sport d'adresse (1) est commandée par au moins une caméra (K1, K2, Kn) en fonction des données de consoles de jeu (S1, S2, Sn) lues à partir des mémoires de consoles de jeu et/ou en fonction de l'affectation réalisée des données de consoles de jeu mentionnées, affectation aux données de participants lues à partir des mémoires de participants (TS1, TS2, TSn).

15. Générateur de nombres aléatoires selon la revendication précédente, où l'installation de jeu d'adresse/de sport d'adresse (1) est surveillée par plusieurs caméras (K1, K2, Kn), où la commutation, en particulier les instants de commutation, est commandée par les différentes caméras (K1, K2, Kn) en fonction des données de consoles de jeu lues à partir des données de consoles de jeu (S1, S2, Sn).

16. Générateur selon l'une quelconque des revendications précédentes, où un signal début de partie est généré automatiquement pour afficher le début d'une partie par un appareil de lancement de départ, où sur la base d'un rapprochement des données de consoles de jeu lues à partir des mémoires de consoles de jeu (S1, S2, Sn) et des données de participants lues à partir des mémoires de participants (TS1, TS2, TSn) avec l'affectation générée par le calculateur (3), affectation des donnes de consoles de jeu aux données de participants et/ou affectation des données de consoles de jeu aux pistes (L 1, L2, Ln) de l'installation de jeu d'adresse/de sport d'adresse (1), on peut constater que le positionnement réel des mémoires de participants (TS1, TS2, TSn) correspond aux consoles de commande (C1, C2, Cn) des consoles de jeu (V1, V2, Vn) et/ou que la disposition des consoles de jeu (V1, V2, Vn) au niveau des pistes (L 1, L2, Ln) correspond à l'affectation respective générée par calculateur.

17. Générateur selon l'une quelconque des revendications précédentes, où ledit au moins un écran permettant l'affichage d'images enregistrées par les caméras (7, 8) dans installation de jeu d'adresse/de sport d'adresse (1) est prévu à un endroit visible d'un dispositif de saisie (502).
